# EUROPÄISCHE PATENTSCHRIFT

(11) **EP 2 825 381 B1**
(45) Veröffentlichungstag und Bekanntmachung des Hinweises auf die Patenterteilung: **23.03.2016**
(21) Anmeldenummer: 12813317.0
(22) Anmeldetag: 18.12.2012
(51) Int. Cl.: C09D 7/12, B05D 5/06, B32B 15/01, C09D 5/22, C09K 11/06, C09D 171/02

(54) **VERFAHREN ZUR BEHANDLUNG EINES MIT EINER METALLBESCHICHTUNG VERSEHENEN STAHLBANDS ODER -BLECHS MIT EINEM NACHBEHANDLUNGSMITTEL SOWIE EIN MIT EINER METALLBESCHICHTUNG VERSEHENES STAHLBAND ODER -BLECH**
METHOD FOR TREATING A STEEL BAND OR PLATE PROVIDED WITH A METAL COATING WITH AN AFTER-TREATMENT AGENT, AND A STEEL BAND OR PLATE COMPRISING A METAL COATING
PROCÉDÉ DESTINÉ À TRAITER UNE BANDE OU TÔLE D'ACIER POURVUE D'UN REVÊTEMENT MÉTALLIQUE AVEC UN AGENT DE TRAITEMENT ULTÉRIEUR AINSI QUE BANDE OU TÔLE D'ACIER POURVUE D'UN REVÊTEMENT MÉTALLIQUE

(30) Priorität: 13.03.2012 DE 102012102082
(43) Veröffentlichungstag der Anmeldung: 21.01.2015
(73) Patentinhaber: ThyssenKrupp Rasselstein GmbH, 56626 Andernach (DE)
(72) Erfinder: BAULIG, Harald, 56218 Mülheim-Kärlich (DE); SAUER, Reiner, 56566 Neuwied (DE); OBERHOFFER, Helmut, 56727 St. Johann (DE); SCHLUPP, Martin, 56598 Rheinbrohl (DE)
(74) Vertreter: Charrier, Rapp & Liebau
(86) Internationale Anmeldenummer: PCT/EP2012/076016
(87) Internationale Veröffentlichungsnummer: WO 2013/135327

(56) Entgegenhaltungen:
- WO-A2-03/089551
- LEE S ET AL: "Self-healing behavior of a polyelectrolyte-based lubricant additive for aqueous lubrication of oxide materials", TRIBOLOGY LETTERS, KLUWER ACADEMIC PUBLISHERS-PLENUM PUBLISHERS, NE, Bd. 24, Nr. 3, 14. November 2006 (2006-11-14), Seiten 217-223, XP019454982, ISSN: 1573-2711, DOI: 10.1007/S11249-006-9121-9
- KHALED M. AL-QUDAH ET AL: "The relationship between serum biotin and oxidant/antioxidant activities in bovine lameness", RESEARCH IN VETERINARY SCIENCE, Bd. 92, Nr. 1, 28. Februar 2012 (2012-02-28), Seiten 138-141, XP055058740, ISSN: 0034-5288, DOI: 10.1016/j.rvsc.2010.10.017

## Beschreibung

Die Erfindung betrifft ein Verfahren zur Behandlung eines mit einer Metallbeschichtung versehenen Stahlbands oder Stahlblechs mit einem Nachbehandlungsmittel nach dem Oberbegriff des Anspruchs 1.

Bei der Herstellung von Weißblech, insbesondere von elektrolytisch in Bandverzinnungsanlagen verzinntem Stahlblech, sowie bei der Herstellung von elektrolytisch verchromtem Feinstblech (electrolytic chromium coated steel, ECCS) wird das metallisch beschichtete Stahlblech nach dem Beschichtungsvorgang zunächst chemisch oder elektrochemisch passiviert und anschließend befettet. Durch die Befettung soll der Reibwert des beschichteten Stahlblechs erniedrigt werden, um das Blech besser verarbeitbar zu machen, beispielsweise für einen Tiefzieh- oder Abstreckvorgang bei der Herstellung von Konserven- oder Getränkedosen. Hierzu wird beispielsweise bei der Herstellung von Weißblech (verzinntes Stahlblech) in Bandverzinnungsanlagen das verzinnte und passivierte Blechband nach einem Reinigungs- und Trocknungsvorgang elektrostatisch mit Dioctylsebacat (DOS), Acetyltributylcitrat (ATBC) oder Butylstearat (BSO) befettet. Die für die Befettung des beschichteten Stahlblechs verwendeten Substanzen müssen dabei auch eine gute Lackhaftung gewährleisten, denn das beschichtete Stahlblech wird zur Verbesserung seiner Korrosionsbeständigkeit und seiner Beständigkeit gegen Säuren in der Regel lackiert. Aus Umweltschutzgründen werden nun für die Lackierung des mit einer Metallbeschichtung versehenen Stahlblechs zunehmend lösemittelfreie oder lösemittelreduzierte Lacke verwendet. Diese Lacke stellen an die Qualität der Oberfläche des beschichteten Stahlbands höhere Anforderungen hinsichtlich der Lackbenetzbarkeit und der Lackhaftung.

Eine Aufgabe der Erfindung besteht daher darin, ein Verfahren zur Behandlung von mit einer Metallbeschichtung beschichteten Stahlbändern oder -blechen aufzuzeigen, mit dem eine verbesserte Lackbenetzung und Lackhaftung und gleichzeitig ein möglichst niedriger Reibwert der beschichteten Oberfläche erzielt werden können, um eine gute Verarbeitbarkeit des beschichteten Stahlbands oder -blechs zu gewährleisten.

Aus der GB 845 097 ist die Verwendung von Polyalkylenglykol-haltigen Nachbehandlungsmitteln zur Einölung von Weißblechoberflächen bekannt, um eine Korrosion der verzinnten Oberfläche zu vermeiden. Hierfür wird eine wässrige Emulsion eines Polymers, welches ein Polyalkylenglykol enthält, auf die Oberfläche aufgebracht.

Aus der WO 03/089551 A2 ist ein Verfahren zum Aufbringen einer Schmiermittelzusammensetzung auf Oberflächen, insbesondere Metall-Oberflächen, bekannt, wobei die Schmiermittelzusammensetzung ein Pfropf-Copolymer mit einem polyonischen Gerüst und einer nicht-aktiven Seitenkette sowie ein wässriges Medium enthält. In einer bevorzugten Ausführungsform ist die nicht-aktive Seitenkette eine Polyethylenglykol-Kette, an welche zusätzlich noch Biotin angehängt sein kann. Biotin ist per se nicht fluoreszierend.

Bei der Behandlung von metallbeschichteten Stahlblechen, wie z. B. Weißblech, mit einem flüssigen Nachbehandlungsmittel ist es vorteilhaft, die auf der Oberfläche des beschichteten Stahlblechs aufgebrachte Schichtdicke des Nachbehandlungsmittels auf gewünschte und zweckmäßige Werte einstellen zu können, um die durch das Nachbehandlungsmittel beeinflussten Eigenschaften der behandelten Blechoberfläche gezielt einstellen zu können. Eine weitere Aufgabe der Erfindung besteht daher darin, ein Verfahren zur Behandlung eines mit einer Metallbeschichtung versehenen Stahlbands oder -blechs mit einem flüssigen Nachbehandlungsmittel aufzuzeigen, bei dem während des Auftragens einer Schicht des Nachbehandlungsmittels auf die metallbeschichtete Oberfläche die aufgebrachte Schichtdicke des Nachbehandlungsmittels erfasst und dadurch auch gezielt eingestellt werden kann.

Die genannten Aufgaben werden gemäß der Erfindung durch ein Verfahren mit den Merkmalen des Anspruchs 1 sowie durch ein mit einer Metallbeschichtung versehenes Stahlband oder -blech mit den Merkmalen des Anspruchs 14 gelöst. Bevorzugte Ausführungsformen des Verfahrens sind in den Ansprüchen 2-13 angegeben.

In dem erfindungsgemäßen Verfahren wird ein mit einer Metallbeschichtung versehenes Stahlband oder -blech mit einem Nachbehandlungsmittel behandelt, wobei das Nachbehandlungsmittel wenigstens ein Polyalkylenglykol enthält und als flüssige Lösung auf die Oberfläche der Metallbeschichtung aufgetragen wird. Das Nachbehandlungsmittel enthält neben dem Polyalkylenglykol wenigstens ein fluoreszierendes Antioxidans. Durch das fluoreszierende Antioxidans wird zum einen die (Alterungs-) Stabilität des im Nachbehandlungsmittel enthaltenen Polyalkylenglykols erhöht, wodurch die Korrosionsstabilität des erfindungsgemäß behandelten Blechs verbessert wird. Andererseits ermöglicht die Verwendung des fluoreszierenden Antioxidans die Erfassung der Schichtdicke der auf der Oberfläche der Metallbeschichtung aufgetragenen Schicht des Nachbehandlungsmittels während des Auftragens. Dadurch ist es möglich, die aufgetragene Schichtdicke des Nachbehandlungsmittels auf einen gewünschten und zweckmäßigen Wert einzustellen, um die sich daraus ergebenden Oberflächeneigenschaften des behandelten Blechs auf den jeweiligen Anwendungsfall einstellen und optimieren zu können. Aufgrund des im Nachbehandlungsmittel enthaltenen fluoreszierenden Antioxidans ist es möglich, während des Nachbehandlungsverfahrens die aufgetragene Schichtdicke des Nachbehandlungsmittels über ein Fluoreszenzspektroskopieverfahren zu erfassen, insbesondere über eine laserinduzierte Fluoreszenzspektroskopie (LIF).

Bevorzugt handelt es sich bei dem Antioxidans um einen fluoreszierenden Kohlenwasserstoff, insbesondere um durch sterisch hindernde Gruppen substituierte Phenole. Als besonders bevorzugtes Antioxidans haben sich Substanzen aus der Gruppe der Ascorbinsäure, insbesondere L-(+) -Ascorbinsäure, oder Salze der Ascorbinsäure erwiesen. Ebenso können Butylhydroxytoluol (BHT) oder Butylhydroxyanisol (BHA) als Antioxidantien bei dem erfindungsgemäßen Verfahren eingesetzt werden.

Zweckmäßig liegt das Nachbehandlungsmittel als wässrige Lösung vor und wird mittels eines Sprühverfahrens oder eines Tauchverfahrens auf die Oberfläche des metallbeschichteten Stahlbands oder -blechs aufgebracht. Nach dem Auftragen der flüssigen Lösung des Nachbehandlungsmittels auf die Oberfläche des mit der Metallbeschichtung versehenen Stahlbands oder -blechs wird das Nachbehandlungsmittel zweckmäßig mittels Quetschrollen abgequetscht und anschließend getrocknet. Als besonders geeignet haben sich dabei Beschichtungsauflagen des Nachbehandlungsmittels mit einer Trockenauflage im Bereich von 1 bis 10 mg/m² und bevorzugt im Bereich von 2 bis 6 mg/m² erwiesen. Verglichen mit den bisher für Weißblech und ECCS eingesetzten Befettungsmitteln (DOS, ATBC oder BSO) weisen die erfindungsgemäß behandelten Oberflächen der Metallbeschichtung eine wesentlich höhere Oberflächenspannung und damit eine bessere Lackbenetzbarkeit auf. Die Oberflächenspannung von herkömmlich befettetem Weißblech liegt beispielsweise im Bereich von 32 bis 35 mN/m, wohingegen die erfindungsgemäß behandelten Oberflächen der Metallbeschichtung eine Oberflächenspannung von mehr als 40 mN/m und insbesondere eine Oberflächenspannung im Bereich von 50 mN/m bis 60 mN/m aufweisen. Der Reibungskoeffizient der erfindungsgemäß behandelten Metallbeschichtung liegt bevorzugt unter 0,3 und insbesondere bei µ=0,10 bis 0,25.

Das im Nachbehandlungsmittel enthaltene Polyalkylenglykol weist bevorzugt eine Molmasse zwischen 2000 g/mol und 20000 g/mol und bevorzugt zwischen 4000g/mol und 10000 g/mol auf. Als besonders geeignet hat sich die Verwendung von Polyethylenglykol (PEG) erwiesen. Andere Polyalkylenglykole wie z. B. Polypropylenglykol oder Polytetramethylenglykol können jedoch ebenso verwendet werden. So hat sich beispielsweise das eine Molmasse von 6000 g/mol aufweisende und unter dem Markenzeichen "Lipoxol® 6000" erhältliche Polyethylenglykol hinsichtlich der Lackbenetzbarkeit und des Reibwerts der behandelten Oberfläche als besonders geeignet erwiesen.

Das in einer wässrigen Lösung des Nachbehandlungsmittels enthaltene Polyalkylenglykol weist bevorzugt Konzentrationen von 0,1 g/l bis 400 g/l und bevorzugt zwischen 1,0 g/l und 200 g/l in der wässrigen Lösung auf. Die Konzentration des Antioxidans in der wässrigen Lösung liegt zweckmäßig zwischen 0,001 g/l und 4,0 g/l. Die Viskosität der wässrigen Lösung des Nachbehandlungsmittels liegt bei 20°C bevorzugt im Bereich von 0,5 bis 60 mm²/s² und der Brechungsindex liegt bevorzugt zwischen 1,30 und 1,40. Die Dichte der wässrigen Lösung des Nachbehandlungsmittels liegt bevorzugt im Bereich von 0,9 bis 1,1 g/cm³.

Nachfolgend wird die Erfindung anhand eines Ausführungsbeispiels näher erläutert. Das Ausführungsbeispiel bezieht sich dabei auf die Nachbehandlung eines verzinnten Stahlblechs (Weißblech). Das erfindungsgemäße Verfahren ist jedoch nicht auf diesen Anwendungsfall beschränkt, es kann bei allen mit einer Metallbeschichtung versehenen Stahlblechen in entsprechender Weise eingesetzt werden. Insbesondere können auch verchromte Stahlbleche (ECCS-Bleche) oder verzinkte Stahlbleche in entsprechender Weise gemäß der Erfindung behandelt werden.

Ein herkömmliches Weißblech mit einer Zinnauflage im Bereich von 1,0 g/m² bis 6 g/m² wurde mit einer wässrigen Lösung eines Nachbehandlungsmittels besprüht, wobei die wässrige Lösung des Nachbehandlungsmittels möglichst gleichmäßig über Sprühdüsen auf die Weißblechoberfläche aufgesprüht worden ist. Anschließend wurde das aufgesprühte Nachbehandlungsmittel mittels Quetschrollen abgequetscht und in einem Ofen getrocknet. Nach dem Trocknen konnte eine Trockenschichtauflage des Nachbehandlungsmittels im Bereich von 2-6 mg/m² nachgewiesen werden.

Zur Herstellung einer wässrigen Lösung des verwendeten Nachbehandlungsmittels wurde zunächst eine wässrige Lösung eines Polyethylenglykols (PEG) mit einer Molmasse von 6000 g/mol in einer Konzentration zwischen 0,1 g/l bis 400 g/l angesetzt und mit Ascorbinsäure (Vitamin C) in einer Konzentration zwischen zwischen 0,001 g/l und 4,0 g/l vermischt. Diese wässrige Lösung wurde dann in einem Sprühverfahren gleichmäßig auf die Oberfläche des Weißblechs aufgetragen.

Während des Auftragens des Nachbehandlungsmittels auf die Oberfläche des Weißblechs wurde die Schichtdicke des aufgetragenen Nachbehandlungsmittels über ein Fluoreszenzspektroskopieverfahren erfasst. Hierfür wurde insbesondere ein Verfahren der laserinduzierten Fluoreszenzspektroskopie eingesetzt. Dabei wird während des Auftragens des Nachbehandlungsmittels ein Laserstrahl auf die Weißblechoberfläche gerichtet. Die Laserstrahlung wird durch die aufgetragene Schicht des Nachbehandlungsmittels absorbiert. Aufgrund der fluoreszierenden Eigenschaften des Nachbehandlungsmittels, welches ein fluoreszierendes Antioxidans (bspw. Ascorbinsäure) enthält, wird die Schicht des Nachbehandlungsmittels durch die eingestrahlte Laserstrahlung zur Lichtemission (Fluoreszenz) angeregt.

Als besonders geeignetes Verfahren zur Erfassung der Schichtdicke des aufgebrachten Nachbehandlungsmittels hat sich die laserinduzierte Fluoreszenzspektroskopie erwiesen, bei der eine zeitintegrierende Messung des Abklingverhaltens der Fluoreszenzsignale bei geeignet gewählten Wellenlängen der eingestrahlten Laserstrahlung erfolgt. Dabei wird nach jeder Anregung mit einem einzelnen Laserpuls für eine vorgegebene Zeitdauer, von beispielsweise 1 ns, das Abklingverhalten der von der Nachbehandlungsmittelschicht emittierten Fluoreszenzstrahlung in geeignet positionierten Messfenstern zeitintegriert als Intensitätswerte I₁ und I₂ erfasst. Das Verhältnis dieser Intensitätswerte I₂ /I₁ hängt dabei von der Menge der fluoreszierenden Substanz (und damit von der Konzentration und der Schichtdicke) ab. Dies ermöglicht unter Trennung von störenden Untergrundsignalen die zuverlässige Erfassung eines Werts, der proportional zur Konzentration des fluoreszierenden Antioxidans und zur Schichtdicke des aufgetragenen Nachbehandlungsmittels ist. Bei vorgegebener Konzentration des fluoreszierenden Antioxidans in der wässrigen Lösung des Nachbehandlungsmittels kann auf diese Weise auf die Schichtdicke des aufgetragenen Nachbehandlungsmittels geschlossen werden.

Die optische Anregung der Schicht des Nachbehandlungsmittels kann dabei beispielsweise mit einem Mikrochiplaser erfolgen, der mit einer Wiederholfrequenz im Bereich von 10 kHz einzelne Laserpulse mit einer Emissionswellenlänge von beispielsweise 266 nm und 355 nm und einer Pulsleistung von typischerweise 250 µW emittiert. Die von der Schicht des Nachbehandlungsmittels emittierte Fluoreszenzstrahlung wird in einen Lichtwellenleiter eingekoppelt und zu einem Detektor geleitet, welcher an eine Auswerteeinheit gekoppelt ist. Der Detektor umfasst einen Photomultiplier, der über optische Filter wellenlängenselektiv die Fluoreszenzsignale erfasst. Die Detektorpulse werden zeitintegriert ausgewertet und über Kalibriermaßnahmen in die zu erfassende Messgröße (hier die Schichtdicke der Nachbehandlungsmittelschicht) umgerechnet.

Mit dem erfindungsgemäßen Verfahren konnten Schichtdicken des Nachbehandlungsmittels in einer Trockenauflage von 1-10 mg/m² aufgebracht und nachgewiesen werden. Die auf diese Weise behandelten Weißblechoberflächen haben Oberflächenspannungen von mehr als 40 mN/m und insbesondere im Bereich von 50 bis 60 mN/m gezeigt. Derartige Oberflächenspannungen sind für die Lackierung der Weißblechoberfläche mit lösemittelfreien oder lösemittelreduzierten Lacken besonders geeignet und die Lackbenetzung wird maßgeblich verbessert.

Die für das erfindungsgemäße Nachbehandlungsmittel vorgeschlagenen Bestandteile zeichnen sich alle durch ihre Lebensmitteltauglichkeit aus. Dies ist insbesondere für die spätere Verwendung der erfmdungsgemäß behandelten Bleche zur Herstellung von Verpackungen für Lebensmittel, wie z.B. Konserven- oder Getränkedosen, von Bedeutung.

Die erfindungsgemäß behandelten Weißblechoberflächen zeichnen sich darüber hinaus durch eine gute Verarbeitbarkeit beispielweise bei der Herstellung von Konserven- und Getränkedosen aus. Dadurch können auch die Maschinenlaufzeiten, beispielsweise bei Streckbiege-Richtrollen von Zerteilanlagen oder Lackieranlagen, nennenswert verringert werden. In überraschender Weise hat sich ferner gezeigt, dass die erfindungsgemäß behandelten Weißblechoberflächen verglichen mit den herkömmlich behandelten Oberflächen eine brillantere und besser glänzende Oberfläche aufweisen. Dies kann durch eine staubabweisende Wirkung der auf die Weißblechoberfläche aufgebrachten Nachbehandlungsmittelschicht begründet werden.

Da das Nachbehandlungsmittel als flüssige Lösung vorliegt, kann das Nachbehandlungsmittel auf einfachere Art und Weise und insbesondere günstiger und schneller auf das Weißblech appliziert werden. Dies ist im Vergleich zu den herkömmlichen Nachbehandlungsmitteln wie DOS oder ATBC von Vorteil, welche über teure und wartungsintensive elektrostatische Einölkabinen aufgetragen werden müssen. Die Erfindung ermöglicht dagegen eine einfache und kostengünstige Applizierung des flüssigen Nachbehandlungsmittels über ein Tauch- oder ein Sprühverfahren, welches ohne Weiteres in den Produktionszyklus von elektrolytischen Bandbeschichtungsanlagen integriert werden kann. Dadurch ist auch die Applizierung des flüssigen Nachbehandlungsmittels auf ein Stahlband möglich, welches mit hoher Bandlaufgeschwindigkeit von bis zu 750 m/min durch eine Bandbeschichtungsanlage bewegt wird.

## Patentansprüche

1. Verfahren zur Behandlung eines mit einer Metallbeschichtung versehenen Stahlbands oder Stahlblechs mit einem Nachbehandlungsmittel, welches wenigstens ein Polyalkylenglykol enthält und als flüssige Lösung auf die Oberfläche der Metallbeschichtung aufgetragen wird, **dadurch gekennzeichnet, dass** das Nachbehandlungsmittel neben dem Polyalkylenglykol ein fluoreszierendes Antioxidans enthält.

2. Verfahren nach Anspruch 1, **dadurch gekennzeichnet, dass** es sich bei dem Antioxidans um einen fluoreszierenden Kohlenwasserstoff, insbesondere durch sterisch hindernde Gruppen substituierte Phenole handelt.

3. Verfahren nach Anspruch 1 oder 2, **dadurch gekennzeichnet, dass** es sich bei dem Antioxidans um eine Ascorbinsäure, insbesondere L-(+)-Ascorbinsäure oder ein Salz der Ascorbinsäure handelt.

4. Verfahren nach einem der voranstehenden Ansprüche, **dadurch gekennzeichnet, dass** es sich bei dem Antioxidans um Butylhydroxytoluol (BHT) oder Butylhydroxyanisol (BHA) handelt.

5. Verfahren nach einem der voranstehenden Ansprüche, **dadurch gekennzeichnet, dass** das Nachbehandlungsmittel als wässrige Lösung vorliegt, wobei die Konzentration des Polyalkylenglykols in der wässrigen Lösung zwischen 0,1 g/l und 400 g/l und bevorzugt zwischen 1,0 g/l und 200 g/l liegt.

6. Verfahren nach einem der voranstehenden Ansprüche, **dadurch gekennzeichnet, dass** die Molmasse des Polyalkylenglykols zwischen 2.000 g/mol und 20.000 g/mol und bevorzugt zwischen 4.000 g/mol und 10.000 g/mol liegt.

7. Verfahren nach einem der voranstehenden Ansprüche, **dadurch gekennzeichnet, dass** es sich bei dem Polyalkylenglykol um ein Polyethylenglykol (PEG) mit handelt, welches bevorzugt eine Molmasse von 6.000 g/mol aufweist.

8. Verfahren nach einem der voranstehenden Ansprüche, **dadurch gekennzeichnet, dass** das Nachbehandlungsmittel als wässrige Lösung vorliegt, wobei die Konzentration des Antioxidans in der wässrigen Lösung zwischen 0,001 g/l und 4,0 g/l liegt.

9. Verfahren nach einem der voranstehenden Ansprüche, **dadurch gekennzeichnet, dass** die flüssige Lösung des Nachbehandlungsmittels nach dem Auftragen auf die Oberfläche des mit der Metallbeschichtung versehenen Stahlbands- oder - blech mittels Quetschrollen abgequetscht und anschließend getrocknet wird.

10. Verfahren nach Anspruch 9, **dadurch gekennzeichnet, dass** nach dem Trocknen auf der Oberfläche der Metallbeschichtung eine Schicht des Nachbehandlungsmittels mit einer Trockenauflage im Bereich von 1 bis 10 mg/m² und bevorzugt im Bereich von 2 bis 6 mg/m² vorhanden ist.

11. Verfahren nach Anspruch 9 oder 10, **dadurch gekennzeichnet, dass** die Oberflächenspannung der behandelten Oberfläche der Metallbeschichtung größer als 40 mN/m ist und insbesondere im Bereich von 50 mN/m und 60 mN/m liegt.

12. Verfahren nach einem der voranstehenden Ansprüche, **dadurch gekennzeichnet, dass** während des Auftragens des Nachbehandlungsmittels auf die Oberfläche der Metallbeschichtung die aufgetragene Schichtdicke des Nachbehandlungsmittels erfasst wird.

13. Verfahren nach Anspruch 12, **dadurch gekennzeichnet, dass** die aufgetragene Schichtdicke des Nachbehandlungsmittels mittels eines Fluoreszenzspektroskopieverfahrens, insbesondere der laserinduzierten Fluoreszenzspektroskopie (LIF), erfasst wird.

14. Mit einer Metallbeschichtung versehenes Stahlband oder Stahlblech, insbesondere Weißblech, welches auf der Oberfläche der Metallbeschichtung, insbesondere der Zinnbeschichtung, eine dünne Auflage eines Nachbehandlungsmittels aufweist, wobei das Nachbehandlungsmittel mindestens ein Polyalkylenglykol enthält, **dadurch gekennzeichnet, dass** das Nachbehandlungsmittel neben dem Polyalkylenglykol ein fluoreszierendes Antioxidans enthält.

## Claims

1. Method for treatment of a steel band or steel plate provided with a metal coating with an after-treatment agent which comprises at least one polyalkylene glycol and is applied in the form of a liquid solution to the surface of the metal coating, **characterised in that** in addition to the polyalkylene glycol the after-treatment agent comprises a fluorescent anti-oxidant.

2. Method according to claim 1, **characterised in that** the anti-oxidant is a fluorescent hydrocarbon, in particular phenols substituted by sterically hindering groups.

3. Method according to claim 1 or 2, **characterised in that** the anti-oxidant is an ascorbic acid, in particular L-(+) ascorbic acid or a salt of ascorbic acid.

4. Method according to one of the preceding claims, **characterised in that** the anti-oxidant is butyl hydroxy toluene (BHT) or butyl hydroxy anisole (BHA).

5. Method according to one of the preceding claims, **characterised in that** the after-treatment agent is present in the form of an aqueous solution, wherein the concentration of the polyalkylene glycol in the aqueous solution lies between 0.1 g/l and 400 g/l and preferably between 1.0 g/l and 200 g/l.

6. Method according to one of the preceding claims, **characterised in that** the molar mass of the polyalkylene glycol lies between 2,000 g/mol and 20,000 g/mol and preferably between 4,000 g/mol and 10,000 g/mol.

7. Method according to one of the preceding claims, **characterised in that** the polyalkylene glycol is a polyethylene glycol (PEG) which preferably exhibits a molar mass of 6,000 g/mol.

8. Method according to one of the preceding claims, **characterised in that** the after-treatment agent is present in the form of an aqueous solution, wherein the concentration of the anti-oxidant in the aqueous solution lies between 0.001 g/l and 4.0 g/l.

9. Method according to one of the preceding claims, **characterised in that** after the application to the surface of the steel band or steel plate provided with the metal coating the liquid solution of the after-treatment agent is squeezed off by means of squeezing rollers and then dried.

10. Method according to claim 9, **characterised in that** after the drying there is a film of the after-treatment agent on the surface of the metal coating with a dry coating thickness in the range of from 1 to 10 mg/m² and preferably in the range of from 2 to 6 mg/m².

11. Method according to claim 9 or 10, **characterised in that** the surface tension of the treated surface of the metal coating is greater than 40 mN/m and in particular lies in the range of from 50 mN/m to 60 mN/m.

12. Method according to one of the preceding claims, **characterised in that** the applied coating thickness of the after-treatment agent is detected during the application of the after-treatment agent to the surface of the metal coating.

13. Method according to claim 12, **characterised in that** the applied coating thickness of the after-treatment agent is detected by means of a fluorescence spectroscopy method, in particular lased-induced fluorescence spectroscopy (LIS).

14. Steel band or steel plate provided with a metal coating, in particular tinplate, which exhibits a thin coating thickness of an after-treatment agent on the surface of the metal coating, in particular the tin coating, wherein the after-treatment agent comprises at least one polyalkylene glycol, **characterised in that** in addition to the polyalkylene glycol the after-treatment agent comprises a fluorescent anti-oxidant.

## Revendications

1. Procédé servant à traiter une bande d'acier ou une tôle d'acier pourvue d'un revêtement métallique à l'aide d'un agent de post-traitement, qui contient au moins un polyalkylène glycol et qui est appliqué sous la forme d'une solution liquide sur la surface du revêtement métallique, **caractérisé en ce que** l'agent de post-traitement contient, outre le polyalkylène glycol, un antioxydant fluorescent.

2. Procédé selon la revendication 1, **caractérisé en ce que** l'antioxydant est un hydrocarbure fluorescent, en particulier des phénols substitués par des groupes à empêchement stérique.

3. Procédé selon la revendication 1 ou 2, **caractérisé en ce que** l'antioxydant est un acide ascorbique, en particulier un acide ascorbique L-(+) ou un sel de l'acide ascorbique.

4. Procédé selon l'une quelconque des revendications précédentes, **caractérisé en ce que** l'antioxydant est un hydroxytoluène butylé (BHT) ou un butylhydroxyanisole (BHA).

5. Procédé selon l'une quelconque des revendications précédentes, **caractérisé en ce que** l'agent de post-traitement se présente sous la forme d'une solution aqueuse, sachant que la concentration du polyalkylène glycol dans la solution aqueuse est comprise entre 0,1 g/l et 400 g/l, et, de manière préférée, entre 1,0 g/l et 200 g/l.

6. Procédé selon l'une quelconque des revendications précédentes, **caractérisé en ce que** la masse molaire du polyalkylène glycol est comprise entre 2 000 g/mol et 20 000 g/mol, et, de manière préférée, entre 4 000 g/mol et 10 000 g/mol.

7. Procédé selon l'une quelconque des revendications précédentes, **caractérisé en ce que** le polyalkylène glycol est un polyéthylène glycol (PEG), qui présente de manière préférée une masse molaire de 6 000 g/mol.

8. Procédé selon l'une quelconque des revendications précédentes, **caractérisé en ce que** l'agent de post-traitement se présente sous la forme d'une solution aqueuse, sachant que la concentration de l'antioxydant dans la solution aqueuse est comprise entre 0,001 g/l et 4,0 g/l.

9. Procédé selon l'une quelconque des revendications précédentes, **caractérisé en ce que** la solution liquide de l'agent de post-traitement est exprimée au moyen de galets de compression puis est séchée après avoir été appliquée sur la surface de la bande d'acier ou de la tôle d'acier pourvue du revêtement métallique.

10. Procédé selon la revendication 9, **caractérisé en ce qu'**une couche de l'agent de post-traitement est présente en une strate sèche comprise dans la plage allant de 1 à 10 mg/m² et, de manière préférée dans la plage allant de 2 à 6 mg/m² après avoir été séchée sur la surface du revêtement métallique.

11. Procédé selon la revendication 9 ou 10, **caractérisé en ce que** la tension de surface de la surface traitée du revêtement métallique est supérieure à 40 mN/m, et en particulier est comprise dans la plage allant de 50 mN/n et 60 mN/m.

12. Procédé selon l'une quelconque des revendications précédentes, **caractérisé en ce que** l'épaisseur de couche appliquée de l'agent de post-traitement est détectée au cours de l'application de l'agent de post-traitement sur la surface du revêtement métallique.

13. Procédé selon la revendication 12, **caractérisé en ce que** l'épaisseur de couche appliquée de l'agent de post-traitement est détectée au moyen d'un procédé de spectroscopie à fluorescence, en particulier au moyen de la spectroscopie à fluorescence induite au laser (LIF).

14. Bande d'acier ou tôle d'acier pourvue d'un revêtement métallique, en particulier tôle blanche, qui présente, sur la surface du revêtement métallique, en particulier du revêtement d'étain, une fine strate d'un agent de post-traitement, sachant que l'agent de post-traitement contient au moins un polyalkylène glycol, **caractérisé en ce que** l'agent de post-traitement contient, outre le polyalkylène glycol, un antioxydant fluorescent.
